(19) Europäisches Patentamt
European Patent Office
Office européen des brevets

(11) **EP 3 481 019 B1**

(12) **EUROPEAN PATENT SPECIFICATION**

(45) Date of publication and mention
of the grant of the patent:
**16.09.2020 Bulletin 2020/38**

(51) Int Cl.:
*H04L 25/06* (2006.01)    *H04B 1/7107* (2011.01)
*H04L 1/00* (2006.01)

(21) Application number: **17199940.2**

(22) Date of filing: **03.11.2017**

(54) **EFFICIENT DECODING OF SUPERPOSITION MODULATION**

EFFIZIENTE DECODIERUNG VON ÜBERLAGERUNGSMODULATION

DÉCODAGE EFFICACE DE MODULATION DE SUPERPOSITION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.05.2019 Bulletin 2019/19**

(73) Proprietor: **Panasonic Intellectual Property
Corporation
of America
Torrance, CA 90503 (US)**

(72) Inventor: **KLENNER, Peter
63225 Langen (DE)**

(74) Representative: **Grünecker Patent- und
Rechtsanwälte
PartG mbB
Leopoldstraße 4
80802 München (DE)**

(56) References cited:
**US-A1- 2009 220 034    US-A1- 2017 111 198
US-B1- 7 876 784**

**Description**

TECHNICAL FIELD

The present invention relates to the field of digital communications in the context of broadcasting digital data, and more specifically to a method and apparatus for demapping superposition modulated signals.

BACKGROUND OF THE INVENTION

Multiplexing multiple signals into a compound signal is a common method in data communications to share a single medium. Traditionally, data carrying different services is multiplexed in time or frequency. These methods are called Time-Division-Multiplex (TDM) and Frequency-Division-Multiplex (FDM). Real-world applications for TDM and FDM can be found in DVB-T2 standard document ETSI EN 302 755 ("Digital Video Broadcasting (DVB); Frame structure channel coding and modulation for a second generation digital terrestrial television broadcasting system (DVB-T2)", v1.4.1, July 2015), in which multiple so-called PLPs (Physical Layer Pipes), each characterized by their own modulation and time interleaver, are sharing a certain frequency band in dedicated time slots, and the Japanese ISDB-T standard with the prominent One-Seg system, in which data is carried in banded segments which are strictly separated in frequency domain thus allowing for power-saving partial reception of individual segments.

It has been long since known that FDM and TDM are not the most spectrally efficient methods to share a medium. Their benefit lays more with the ease of implementation. In the paper "Cooperative broadcasting" by P. P. Bergmans and T. M. Cover (IEEE Trans. Inf. Theory, vol. 20, no. 3, pp. 317-324, May 1974), it is shown that actually the superposition of different services increases the capacity over either TDM or FDM. Only recently this form of multiplexing has found its way into a current standard, namely ATSC 3.0, where it is called Layered-Division-Multiplexing (LDM); cf. the article "Low Complexity Layered Division for ATSC 3.0" by S. I. Park et al. (IEEE Transactions on Broadcasting, vol. 62, no. 1, pp. 233-243, March 2016).

Superposition modulation also is a core element of a recently proposed novel terrestrial broadcast system, called WiB, short for Wideband transmission with reuse factor 1, as described in the paper "WiB: a new system concept for digital terrestrial television (DTT)" by E. Stare, J. J. Giménez, P. Klenner (IBC Conference 2016). In WiB, neighboring transmitters are transmitting individual services. Due to the implied reuse factor 1, a receiver particularly in the mush area between the transmitters will receive the sum signal of all transmitted signals. From the point of view of the receiver, however, the received signal looks like a signal obtained from layered-division multiplexing or superposition modulation. Hence, with correctly designed FEC-coding and modulation schemes, a receiver is able to employ successive interference cancellation techniques to retrieve the data.

Intuitively, the edge of superposition modulation over TDM/FDM in capacity is obtained due to the simultaneous transmission of more than one service without pausing in either time domain or frequency domain. A particular use case for superposition modulation, for which also its benefit is most pronounced, is the provision of services to mobile and fixed receivers. Mobile and fixed receiving conditions are usually characterized by low and high signal-to-noise ratios (SNR), respectively. Here, the mobile service is carried with a data rate sufficiently low to withstand the low SNR as well as the presence of the fixed service. The receiver for the fixed service, on the other hand, can take advantage of a relatively high SNR and detect the robust mobile layer first, subtract its data and then proceed by detecting the actually desired data for the fixed service.

The underlying principle of detecting a particular layer first and eliminating its presence before addressing the detection of the actual data ("codebits" or "information bits") is called Successive Interference Cancellation (SIC). Depending on the chosen implementation, the SIC-processing may cause the largest increase in complexity on the receiver-side when compared to legacy TDM and FDM techniques. A popular method, presented in the article by Park et al., for detecting the fixed layer is to firstly demodulate the mobile layer, which comprises demapping, bit-deinterleaving, FEC-decoding, then secondly to bit-interleave it, remodulate it on the mobile layer's signal alphabet and subtract it from the received signal, before thirdly the fixed layer is eventually demodulated.

Although in Park et al. this approach is called "low-complex", it still requires several stages to be processed before the actual fixed data can be addressed. Especially, FEC-decoding needs to be run twice. Taken together these steps cause latency, extra buffer requirements and power consumption.

An important aspect of this method is an inherent hard-decision on the mobile codebits before subtraction. Although hard-decision is notorious for causing a performance loss, it is a feasible approach in connection with the prior FEC-decoding step which reduces the risk of a wrong decision to a large extent.

Document US 2009/220034 (A1) discloses a method for receiving a layered transmission of data in a wireless communication system using an iterative layered receiver structure. A receiver comprises a layer 1 demapper and a layer 1 outer decoder to iteratively decode layer 1 of the coded data, and a layer 2 demapper and a layer 2 outer decoder to iteratively decode layer 2 of the coded data. The layer 1 demapper generates a layer 1 set of likelihood estimates only for bits of the first information layer of received signal data and the layer 2 demapper generates a layer 2 set of likelihood estimates only for information bits of the layer 2 of received signal data. The layer 2 set of likelihood estimates are generated in response to the received signal data and, in at least one of the one or more iterations, also in response to one or more of the likelihood estimates generated by the outer decoders in decoding schemes for at least one layer other than layer 2.

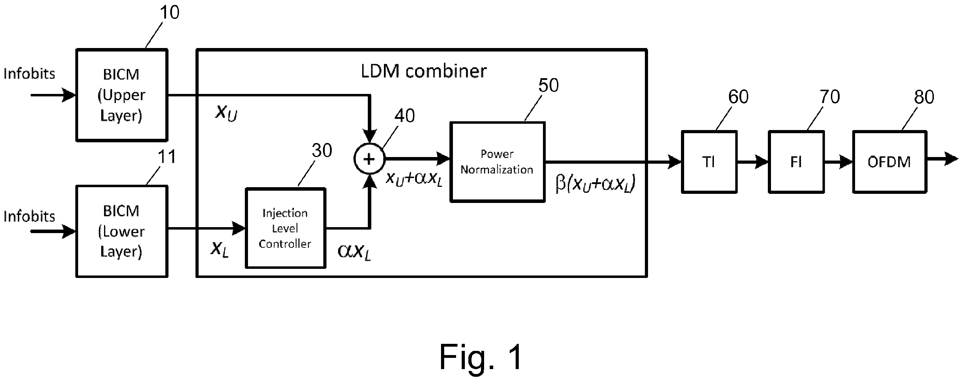

Fig. 1 illustrates the general concept of LDM for two layers. Depending on the context, these layers are called either Upper and Lower layer or Mobile and Fixed or Stationary layer. Note also that in ATSC 3.0, the Upper layer is called Core layer, and the Lower layer Enhanced layer.

In Fig. 1, there is a first BICM (bit-interleaved coded modulation) unit (10) for the digital data of the upper layer and a second BICM unit (11) for the digital data of the lower layer. Each BICM unit (10, 11) includes an encoder (not shown) for encoding the input data with an error correcting code, a bit interleaver (not shown) for increasing the resilience to burst errors, and a symbol mapper (not shown) for mapping the coded and interleaved bit sequence into a base-band sequence of complex digital symbols or cells. Here, the sequence of symbols is also referred to as a modulated signal. Additionally, the term FEC-block is frequently used to refer to a set of cells carrying the coded, bit-interleaved and modulated bits of a single FEC-codeword.

The modulated signal of the lower layer is fed through the injection level controller (30), which applies a scaling by factor $\alpha \leq 1$. The scaled lower layer signal and the (unscaled) upper layer signal are then combined by means of a signal adder (40), which performs algebraic addition on a cell-by-cell basis. The result of this operation may be scaled once more in order to normalize the power of the compound signal (power normalization unit 50). The process of controlling the injection level and the process of normalizing the power of the compound signal may also be combined into a single step of computing a suitably weighted sum of the two signals, or performed in any other suitable manner.

In principle, of course, more than two layers are conceivable. Both layers can carry one or more PLPs. The Upper layer carries a low-rate service $x_U$ aimed at mobile reception, while the Lower layer carries a high-rate service $x_L$ aimed at stationary reception. An injection level controller provides a positive scaling factor $\alpha \leq 1$ which may reduce the power of the lower layer, followed by a superposition of the two layers yielding the non-normalized signal $x_U + \alpha\, x_L$. The compound signal is subsequently normalized to unit power via an appropriate scaling factor $\beta$ before it is passed through time interleaver (60), frequency interleaver (70), and the final OFDM and framing stage (80), which are added here for completeness' sake.

In general terms, the corresponding receiver operation is understood such that a mobile receiver, which is interested in the Upper layer only, also detects the Upper layer only. A stationary receiver interested in the Lower layer is required to perform successive interference cancellation, i.e., the Upper layer is detected first. Then, assuming that the Upper layer is detected successfully, it is remodulated and the remodulated cells are subtracted from the received cells followed by detection of the Lower layer.

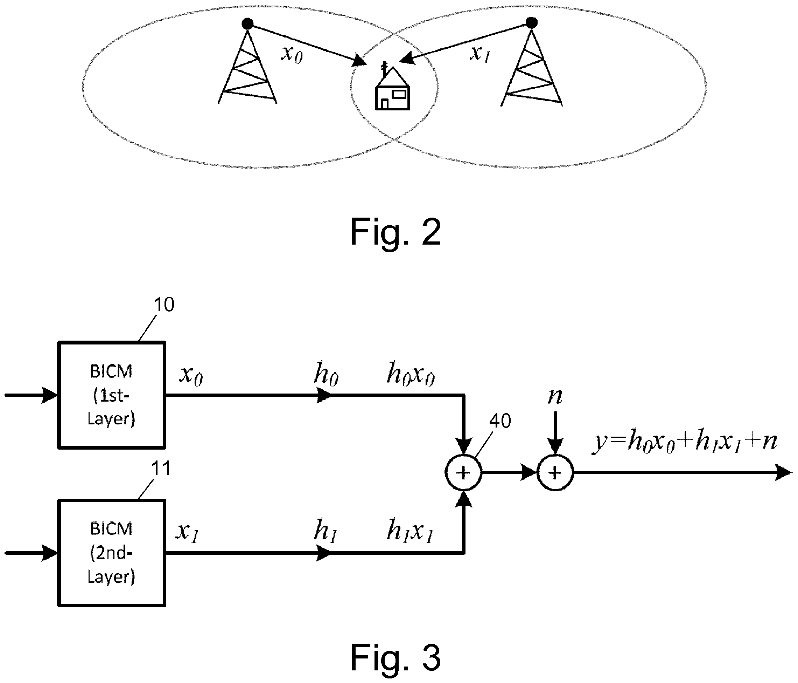

Fig. 2 is an illustration of a wideband transmission (WiB) scenario, i.e., a scenario where transmitters are allowed explicitly to interfere. An example is the next generation DTT system described in the paper by E. Stare et al., which utilizes a frequency reuse factor of 1. Additional aspects of WiB are the use of a very large bandwidth (possibly the whole remaining UHF-band currently used for traditional DTT amounting to roughly 220 MHz) and a highly robust transmission mode in order to cope with the interference and thus a starkly reduced transmission power compared to current transmission concepts.

As shown in Fig. 2, two transmitters are emitting signals x0 and x1 in the same frequency band. The ellipses represent the coverage area of the transmitters. The receiver in the mush area will observe the sum signal of both transmitted signals.

LDM and WiB are particular instances of Superposition Modulation (SM). While LDM explicitly adds transmit signals at the transmitter, WiB implicitly leads to the summation of transmitted signals at the receiver which is due to the usage of the same frequency band.

Thus, in principle, for the receiver front-end it is irrelevant in which way the superposition occurred. A system model applicable to both, LDM and WiB, is shown in Fig. 3. The coefficients $h_0$ and $h_1$ can serve either as scaling factors or as channel coefficients. In the former case the system model represents LDM, in the latter case it represents WiB.

In order to achieve the capacity which is promised by information theory for superposition modulation, receivers need to follow a specific set of operations. This is most clearly seen in LDM when serving different types of receiver, e.g., mobile and stationary, simultaneously in an information-theoretically optimal way. The mobile receiver focusing on the Upper layer only is most akin to a traditional broadcast receiver, in that it performs demapping, deinterleaving and decoding all in one shot. The fixed receiver is required to remove the upper layer before it can detect the Lower layer. Hence, it basically is required to demodulate in two passes. The same demodulation in two passes can also be seen in WiB receivers in which a first transmitted signal is detected, and subtracted after remodulation, before a second transmitted signal is detected. The aim of the present invention is to simplify the processing to a large degree such that under certain system settings and certain reception conditions the performance penalty is negligible.

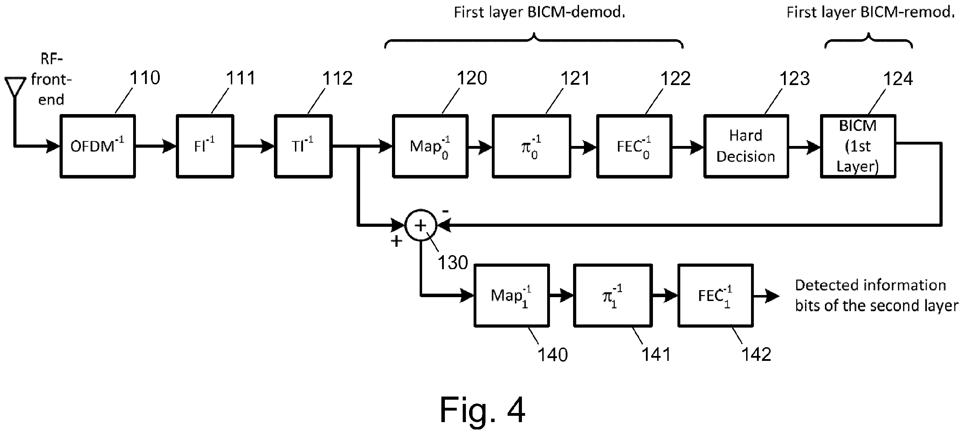

Fig. 4 shows a block diagram of a conventional receiver for the second layer of a superposition signal, e.g.,

the lower layer of an LDM-signal. The processing performed by this receiver will also be referred to as full SIC, in order to signify that the complete decoding and subtraction of the first layer is performed.

The receiver of Fig. 4 roughly consists of three components. Firstly, the RF-frontend serves as interface between antenna and baseband, and it is followed by OFDM-demodulation (110) as well as time- and frequency deinterleaving (111, 112). Secondly, the first layer is demodulated which comprises the steps of demapping (120), bit-deinterleaving (121), FEC-decoding (122), hard-deciding the decoded information bits (123), remodulating these bits to the constellation of the first layer (first layer BICM remodulation, 124). This reconstructed sequence of first layer cells is then subtracted (130) from the deinterleaved received signal. Thirdly, the second layer is demapped (140) from the resulting difference signal, bit-deinterleaved (141) and FEC-decoded (142).

## SUMMARY OF THE INVENTION

It is an object of the present invention to provide an improved method and apparatus for detecting information bits conveyed by a superposition of two or more modulated signals.

This is achieved by the features as set forth in the independent claims. Preferred embodiments are the subject matter of dependent claims.

It is the particular approach of the present invention to calculate log-likelihood ratios for codebits of the first modulated signal and to use the same directly as a-priori information for demapping codebits of the second modulated signal. In this manner, all processing steps relating to 1st-layer FEC-decoding, re-coding, re-modulation and signal subtraction of the conventional SIC can be dispensed with.

According to the independent claims, a method and an apparatus for detecting information bits in a received signal are provided.

In a preferred embodiment, the method further comprises the step of decoding the codebits represented by the first signal on the basis of the computed first log-likelihood ratios. The first log-likelihood ratios, which have to be calculated for decoding codebits represented by the second signal, can thus be reused for decoding codebits represented by the first signal.

In a preferred embodiment, the method further comprises the steps of generating a third signal by re-encoding and re-modulating the decoded information bits of the first signal; generating a difference signal (z) by subtracting the third signal from the received signal; and computing, from the difference signal (z), third log-likelihood ratios for codebits represented by the second signal. Here, the third log-likelihood ratios for the second signal may be computed according to an equation equivalent to Eq. (5) defined below. Hence, the decoding method can also include the steps required for performing full SIC. In this manner, codebits represented by the second signal can be decoded either by Quick-SIC or by full SIC, depending on circumstances, such as current reception conditions.

In a particularly preferred embodiment, the method further comprises the steps of estimating a measure of mutual information between the codebits and either one of the second log-likelihood ratios and the third log-likelihood ratios; comparing the estimated measure with a threshold value; and selectively decoding, responsive to a result of the comparing step, the codebits represented by the second signal on the basis of either one of the second log-likelihood ratios and the third log-likelihood ratios. This is a particularly advantageous implementation of a hybrid decoder according to the present invention, which employs Quick-SIC or full SIC, whichever is more appropriate under given circumstances. The decision of whether Quick-SIC or full SIC is employed may be taken in an automated manner based on a measure of the mutual information between the codebits and the log-likelihood ratios. Full SIC may be used as a fallback method for decoding codebits in case that the noise level or other properties of the received signal or the transmission channel or the applied coding scheme preclude application of Quick-SIC. In this manner, the computational efficiency of Quick-SIC may be exploited as far as possible, whereas reliable decoding based on full SIC is guaranteed under all circumstances.

Advantageously, the estimated measure is averaged over a plurality of successive codebits (or LLRs) in order to obtain a reliable and meaningful measure for deciding between Quick-SIC or full SIC. Also, a hysteresis may be implemented in order to avoid erratic switching between both methods.

Preferably, the threshold value is obtained from signaling information. In this manner, the transmitter can exert control over the decoding method used by the receiver. Moreover, it can be ensured that the receiver operates always with the optimum threshold value.

The codebits represented by the second signal are preferably decoded on the basis of the third log-likelihood ratios, when the estimated measure of the second log-likelihood ratios is smaller than the threshold value. A small value of the estimated mutual information between the mutual information between the codebits and the second log-likelihood ratios indicates that results obtained by Quick-SIC may be not reliable. In such a situation, application of full SIC may be more desireable.

In a preferred embodiment, the method further comprises the step of switching the decoding of the codebits represented by the second signal from a first mode, in which said codebits are decoded on the basis of the second log-likelihood ratios, to a second mode, in which said codebits are decoded on the basis of the third log-likelihood ratios, when the estimated measure of mutual information between said codebits and the second log-likelihood ratios is smaller than a first threshold value. Further, decoding of the codebits represented by the second signal may be switched from the second mode to the first mode, when the estimated measure of mutual information between said codebits and the third log-likelihood ratios exceeds a second threshold value higher than the first threshold value. In this manner, a form of hysteresis is implemented, thus avoiding erratic switchings between the two modes of decoding. The first threshold value and the second threshold value may preferably be obtained from suitable signaling information.

In a preferred embodiment, the measure is estimated according to an equation equivalent to Eq. (9) defined below. This equation is one embodiment for estimating the mutual information between the codebits and the log-likelihood ratios.

BRIEF DESCRIPTION OF THE DRAWINGS

The above and other objects and features of the present invention will become more apparent from the following description and preferred embodiments given in conjunction with the accompanying drawings, in which:

Fig. 1    is a block diagram illustrating constellation superposition for two-layer LDM in ATSC 3.0,

Fig. 2    is an illustration of a WiB transmission scenario,

Fig. 3    is a block diagram illustrating a system model for superposition modulation applicable to LDM and WiB with two layers,

Fig. 4    is a block diagram of a conventional receiver for the second (lower or fixed) layer,

Fig. 5    is a block diagram of a receiver with "Quick-SIC", in accordance with an embodiment of the present invention, and

Fig.6    is a block diagram of a hybrid demodulation architecture, in accordance with an embodiment of the present invention.

DETAILED DESCRIPTION

The present invention provides a low-complexity receiver architecture, applicable to both LDM and WiB, for performing SIC on a superposition-modulated signal by utilizing the soft-information directly from the demapper thereby avoiding the extra FEC-decoding and re-modulation steps. The present invention also provides a hybrid approach which allows switching between the subsequently described decoding approach and conventional SIC. The hybrid approach allows the receiver to make a trade-off between power-saving, latency, throughput, and error-performance.

In LDM, the upper layer carries a very robust signal, while in WiB all signals are robust by definition. Furthermore, a stationary receiver can usually be assumed to benefit from a high SNR. In this situation it can be assumed that already the demapper for the signal of a first layer, i.e, the upper layer in LDM or the first transmitter in WiB, yields reliable soft-information *without* additional FEC-decoding. Nevertheless a hard decision on the first layer codebits and their subtraction may be premature and incur a non-acceptable loss. It is however possible to use the demapper output of the first layer as a-priori soft information for the second layer demapping which effectively replaces a full SIC. The method is thus suitably described as Quick-SIC.

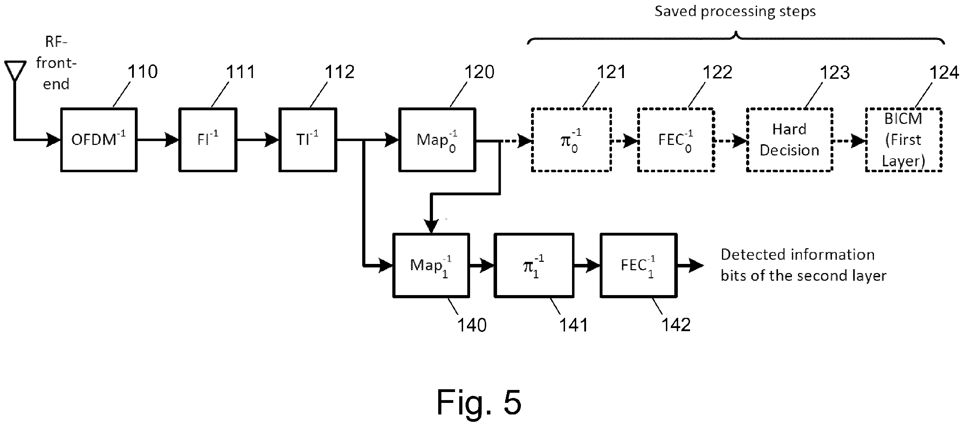

Fig. 5 shows a block diagram of the receiver with "Quick-SIC", according to an embodiment of the present invention. The dashed blocks are shown only for comparison with Fig. 4 and are not actually needed in an implementation. The RF-frontend remains unchanged and serves as interface between antenna and baseband followed by OFDM-demodulation (110) as well as time- and frequency deinterleaving (111, 112). The demodulation of the first layer is massively simplified and consists only of the demapping block (120). The processing of the second layer is slightly modified in that the $2^{nd}$-layer demapper (140) is given in addition to the deinterleaved received signal also the LLRs of the first layer demapper as a-priori soft-information. The output of the demapper (140) is bit-deinterleaved (141) and FEC-decoded (142) as described in conjunction with Fig. 4.

In the following, demapping of the first layer will be described. Here, at least two demapping approaches can be envisaged for computing Log-Likelihood-Ratios (LLRs) for the first layer, i.e., Gaussian demapping and Joint demapping.

The gist of Gaussian demapping is that the demapper assumes any interference other than thermal noise to be also thermal noise. In other words, interference is assumed to be just another source of thermal noise. The disadvantage is that a mismatch between actual signal statistics and assumed signal statistic may lead to less reliable LLRs, the advantage is that less computing power is required to obtain the LLRs due to a reduced number of Euclidean distances to be checked.

In particular, for a received signal y (after OFDM-demodulation and deinterleaving)

$$y = h_0 \cdot x_0 + h_1 \cdot x_1 + n \tag{1}$$

which is a superposition of a first signal signal $x_0$, a second signal $x_1$ (with appropriate weights $h_0$ and $h_1$), and additive noise $n$, the Gaussian demapper computes LLRs $L(i)$ for the $i$-th codebit $c_i$ for each bit-level $i$ with $0 \leq i < \log_2 |A_{1st}|$ according to

$$L_{1st}(c_i) = \log \frac{\sum_{x_0 \in A_{1st,i}^0} \exp\left(-\frac{1}{\tilde{\sigma}^2} \|y - h_0 x_0\|^2\right)}{\sum_{x_0 \in A_{1st,i}^1} \exp\left(-\frac{1}{\tilde{\sigma}^2} \|y - h_0 x_0\|^2\right)}, \tag{2}$$

$$i = 0..\log_2 |A_{1st}| - 1$$

with the assumed equivalent noise power $\tilde{\sigma}^2 = |h_1|^2 \cdot E\{|x_1|^2\} + \sigma_n^2$. Here, $\sigma_n^2$ is the power of the additive noise $n$. The symbol alphabet for the first layer is denoted as $A_{1st}$, and the sub-alphabets for which the $i$-th codebit $c_i$ assumes the binary value $b = \{0,1\}$ as $A_{1st,i}^b$.

Alternatively, a joint demapping approach can exploit the knowledge about the signal constellation of the interfering signal and thereby drop the assumption of thermal noise. The disadvantage here is increased complexity due to the increased number of Euclidean distances, while the advantage is that more reliable LLRs are obtained due to the matched nature between assumed and actual signal statistic.

$$L_{1st}(c_i) = \log \frac{\sum_{x_0 \in A_{1st,i}^0} \sum_{x_1 \in A_{2nd}} \exp\left(-\frac{1}{\sigma_n^2} \|y - h_0 x_0 - h_1 x_1\|^2\right)}{\sum_{x_0 \in A_{1st,i}^1} \sum_{x_1 \in A_{2nd}} \exp\left(-\frac{1}{\sigma_n^2} \|y - h_0 x_0 - h_1 x_1\|^2\right)}, \tag{3}$$

$$i = 0..\log_2 |A_{1st}| - 1$$

Next, demapping of the second layer will be described. Just as for the first layer, at least two demapping approaches can be envisaged for computing Log-Likelihood-Ratios (LLRs) for the second layer, i.e., also Gaussian demapping and Joint demapping.

Joint demapping of the second layer is very similar to the joint demapping of the first layer described above, with the exception that the LLRs of the first layer demapper, $L_{1st}(c_i)$, can be exploited.

$$L_{JD,2nd}(c_j)$$

$$= \log \frac{\sum_{x_0 \in A_{1st}} \sum_{x_1 \in A_{2nd,j}^0} \exp\left(-\frac{1}{\sigma^2} \|y - h_0 x_0 - h_1 x_1\|^2 - \sum_{i=0}^{\log_2 |A_{1st}| - 1} \mu_i^{-1}(x_0) L_{1st}(c_i)\right)}{\sum_{x_0 \in A_{1st}} \sum_{x_1 \in A_{2nd,j}^1} \exp\left(-\frac{1}{\sigma^2} \|y - h_0 x_0 - h_1 x_1\|^2 - \sum_{i=0}^{\log_2 |A_{1st}| - 1} \mu_i^{-1}(x_0) L_{1st}(c_i)\right)},$$

$$j = 0..\log_2 |A_{2nd}| - 1 \tag{4}$$

The term $-\sum_{i=0}^{\log_2 |A_{1st}| - 1} \mu_i^{-1}(x_0) L_{1st}(c_i)$ provides the joint demapper of the second layer with soft a-priori information about the first layer. In particular, it represents the a-priori probability for the cell $x_0$. The function

$\mu_i^{-1}(x_0) \in \{0,1\}$ denotes an inverse mapping function which takes a cell from the first layer, $x_0$, and returns the *i*-th codebit carried by this cell.

Hence, according to Eq. (4), the LLRs of the second layer can be computed directly from the received signal and the LLRs of the first layer - without re-encoding and re-modulating codebits of the first layer.

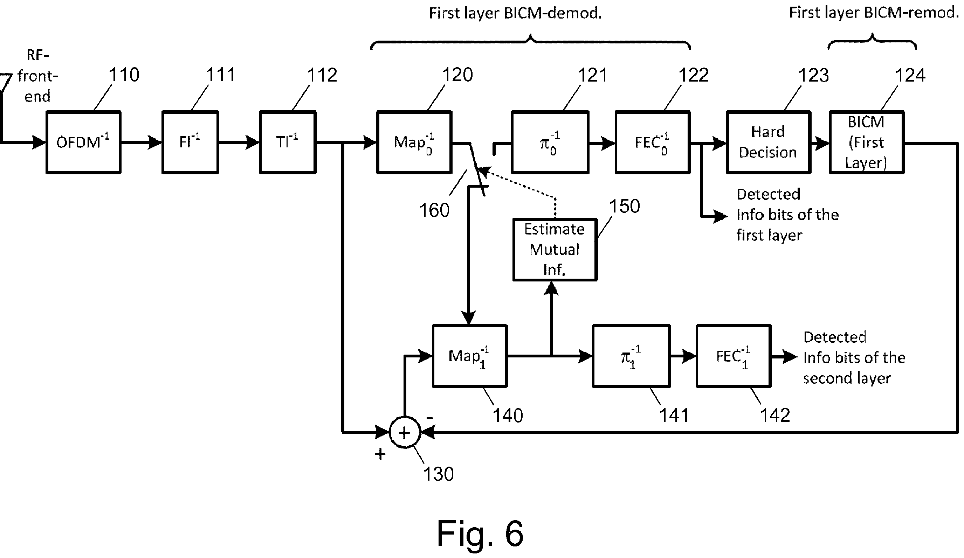

Fig.6 is a block diagram of a hybrid demodulation architecture, in accordance with an embodiment of the present invention. Fig. 6 is a combination of full SIC, as explained in conjunction with Fig. 4, and Quick SIC, as explained above in conjunction with Fig. 5. Here, like reference numerals denote like elements and a repetition of the detailed explanation of these elements will be avoided.

Hybrid demodulation combines the benefits of Quick-SIC and full SIC. A switching element (160) is provided in order to allow the receiver to use either one of these techniques. In order for the receiver to decide which SIC-path to choose, it needs some form of an indicator. Such an indicator is determined in an estimator unit (150) on the basis of the 2nd-layer LLRs, for instance, on the basis of the currently available mutual information between second layer codebits and LLRs at the decoder input of the second layer decoder. Thus if the current mutual information is sufficiently high, the receiver can choose to use the Quick-SIC, if the mutual information is not strong enough, it can choose to use the full SIC.

In case that full-SIC is used, a Gaussian demapper may be employed for computing LLRs for the second layer from the difference signal z obtained by subtracting the reconstructed sequence of first layer cells $\bar{x}_0$ from the (deinterleaved) received signal *y*, i.e., $z = y - h_0\bar{x}_0$. Specifically, $L_{2nd}(c_j)$ for the *j*-th codebit $c_j$ for each bit-level *j* with $0 \leq j < \log_2 |A_{2nd}|$ is given by

$$L_{2nd}(c_j) = \log \frac{\sum_{x_1 \in A^0_{2nd,j}} \exp\left(-\frac{1}{\sigma_n^2}\|z - h_1 x_1\|^2\right)}{\sum_{x_1 \in A^1_{2nd,j}} \exp\left(-\frac{1}{\sigma_n^2}\|z - h_1 x_1\|^2\right)}, \qquad (5)$$

$$j = 0..\log_2 |A_{2nd}| - 1$$

The mutual information between codebits $b \in \{0,1\}$ and the received LLR *L* can be defined as

$$I(b;L) = 1 - E\{\log_2(1 + \exp(-(1 - 2b) \cdot L))\} \qquad (6)$$

The codebits *b* are unfortunately not available to the receiver. But an estimate, also called a softbit, can be computed from the received LLR. From the definition of an LLR, the probability for the *k*-th codebit $b_k$ being the 0-bit is

$$p_{0,k} = \frac{1}{1 + \exp(-L_k)} \qquad (7)$$

The probability for the codebit b being the 1-bit is

$$p_{1,k} = \frac{1}{1 + \exp(+L_k)} \qquad (8)$$

With these probabilities one finds the estimate for the mutual information based only on the LLRs and not requiring the actually transmitted bits,

$$\hat{I}(b_k; L_k) = 1 - p_{0,k} \log_2(1 + \exp(-L_k)) - p_{1,k} \log_2(1 + \exp(+L_k)) \qquad (9)$$

$$= 1 - \frac{\log_2(1 + \exp(-L_k))}{1 + \exp(-L_k)} - \frac{\log_2(1 + \exp(+L_k))}{1 + \exp(+L_k)}$$

It is to be noted that the LLRs $L_k$ in Eq.(9) are either calculated according to Eq.(4) when Quick-SIC is used, or according to Eq.(5) when full-SIC is used.

The instantaneous mutual information above requires an additional averaging operation in order to compute average mutual information. Various moving average filters in FIR- or IIR-form may be employed depending on the application.

The moving average filter in FIR-form realizes a convolution with a rectangular pulse extending over W samples and with an amplitude of 1/W.

$$\bar{I}(b_k; L_k) = \frac{1}{W} \sum_{i=0}^{W-1} \hat{I}(b_{k-i}; L_{k-i}) \qquad (10)$$

It may also be implemented by a delay line through which the instantaneous mutual information is passed and then suitably adding and subtracting latest and oldest samples from the average mutual information.

Potentially the moving average filter requires a very long convolution kernel (large W). Then an exponential moving average filter may be easier to implement.

$$\bar{I}(b_k; L_k) = w\hat{I}(b_k; L_k) + (1 - w)\bar{I}(b_{k-1}; L_{k-1}) \qquad (11)$$

The weighing factor $w$ can be chosen between zero and one, making the filter react quicker or slower to changes in the input.

A threshold may be provided to the receiver in the L1 signaling to facilitate switching between full-SIC and Quick-SIC as per Fig. 6. The threshold represents the minimum mutual information between codebits and received Llrs which is required for the FEC-decoding to succeed error-free. The threshold should be chosen slightly larger than the code rate of the employed code which leaves effectively some headroom for imperfections in practical codes. One particular imperfection is the finite girth of the parity check matrix of LDPC codes which leads to adverse feedback of non-extrinisic information during the iterative decoding. The receiver may compare the measured average mutual information $\bar{I}(b_k; L_k)$ with the L1 information about the employed code whose mutual information required for successful decoding is known by way of the threshold. Hence, if the current average mutual information is smaller than the required mutual information the full SIC is performed. Otherwise, the Quick-SIC can be employed.

In a preferred embodiment, the receiver may monitor the mutual information (or a related measure such as the entropy) and switch forth and back between Quick-SIC and full-SIC. In order to avoid unnecessary switchings, a hysteresis may be implemented by switching to full-SIC if mutual information falls below a first threshold and switching to Quick-SIC if mutual information exceeds a second threshold higher than the first threshold.

Summarizing, the present invention provides a novel technique (Quick-SIC) for detecting information bits in a superposition of two or more modulated signals. According to a first aspect of the invention, log-likelihood ratios for codebits of a first modulated signal are computed and used as a priori information for demapping codebits of the second modulated signal. The codebits of the second modulated signal can thus be decoded without having to re-code and re-modulate the codebits of the first modulated signal. According to a second aspect, a hybrid demodulation technique is provided that estimates the mutual information between codebits and log-likelihood ratios, and selectively applies either conventional SIC or Quick-SIC, depending on whether or not the mutual information exceeds a certain threshold value.

**Claims**

1. A method for detecting information bits in a received signal $y$, said received signal comprising a superposition of at least a first signal $x_0$, a second signal $x_1$ and additive noise $n$ with power $\sigma_n^2$ such that $y = h_0 \cdot x_0 + h_1 \cdot x_1 + n$ with

appropriate weights $h_0$ and $h_1$, said method comprising the steps of:

computing, from the received signal, first log-likelihood ratios for codebits represented by the first signal;
computing, from the received signal and the first log-likelihood ratios, second log-likelihood ratios for codebits represented by the second signal; and
decoding the codebits represented by the second signal on the basis of the computed second log-likelihood ratios,
**characterized in that**
the first log-likelihood ratios for the first signal are computed according to an equation equivalent to

$$L_{1st}(c_i) = \log \frac{\sum_{x_0 \in A^0_{1st,i}} \exp\left(-\frac{1}{\tilde{\sigma}^2} \|y - h_0 x_0\|^2\right)}{\sum_{x_0 \in A^1_{1st,i}} \exp\left(-\frac{1}{\tilde{\sigma}^2} \|y - h_0 x_0\|^2\right)},$$

or

$$L_{1st}(c_i) = \log \frac{\sum_{x_0 \in A^0_{1st,i}} \sum_{x_1 \in A_{2nd}} \exp\left(-\frac{1}{\sigma_n^2} \|y - h_0 x_0 - h_1 x_1\|^2\right)}{\sum_{x_0 \in A^1_{1st,i}} \sum_{x_1 \in A_{2nd}} \exp\left(-\frac{1}{\sigma_n^2} \|y - h_0 x_0 - h_1 x_1\|^2\right)},$$

with $i = 0..\log_2 |A_{1st}| - 1$, and
the second log-likelihood ratios for the second signal are computed according to an equation equivalent to

$$L_{2nd}(c_j)$$

$$= \log \frac{\sum_{x_0 \in A_{1st}} \sum_{x_1 \in A^0_{2nd,j}} \exp\left(-\frac{1}{\sigma^2} \|y - h_0 x_0 - h_1 x_1\|^2 - \sum_{i=0}^{\log_2 |A_{1st}|-1} \mu_i^{-1}(x_0) L_{1st}(c_i)\right)}{\sum_{x_0 \in A_{1st}} \sum_{x_1 \in A^1_{2nd,j}} \exp\left(-\frac{1}{\sigma^2} \|y - h_0 x_0 - h_1 x_1\|^2 - \sum_{i=0}^{\log_2 |A_{1st}|-1} \mu_i^{-1}(x_0) L_{1st}(c_i)\right)},$$

with $j = 0..\log_2 |A_{2nd}| - 1$,
wherein

$L_{1st}(c_i)$ denotes the log-likelihood ratio for the $i$-th codebit $c_i$ for each bit-level $i$ with $0 \le i < \log_2 |A_{1st}|$,
$L_{2nd}(c_j)$ denotes the log-likelihood ratio for the $j$-th codebit $c_j$ for each bit-level $j$ with $0 \le j < \log_2 |A_{2nd}|$,
$A_{1st}$ is the symbol alphabet for the first layer,

$A^b_{1st,i}$ are the first-layer sub-alphabets for which the $i$-th codebit $c_i$ assumes the binary value $b = \{0,1\}$,
$A_{2nd}$ is the symbol alphabet for the second layer,

$A^b_{2nd,j}$ are the second-layer sub-alphabets for which the $j$-th codebit $c_j$ assumes the binary value $b = \{0,1\}$,
$\mu_i^{-1}(x_0)$ is an inverse mapping function which takes a symbol from the first layer, $x_0$, and returns the i-th codebit carried by this symbol, and

$\tilde{\sigma}^2 = |h_1|^2 \cdot E\{|x_1|^2\} + \sigma_n^2$ is the equivalent noise power.

2. A method according to claim 1, further comprising the step of decoding the codebits represented by the first signal on the basis of the computed first log-likelihood ratios.

3. A method according to claim 2, further comprising the steps of:

generating a third signal by re-encoding and re-modulating the decoded codebits of the first signal;

generating a difference signal ($z$) by subtracting the third signal from the received signal;
computing, from the difference signal ($z$), third log-likelihood ratios for codebits represented by the second signal.

4. A method according to claim 3, wherein the third log-likelihood ratios for the second signal are computed according to an equation equivalent to

$$L_{2nd}(c_j) = \log \frac{\sum_{x_1 \in A_{2nd,j}^0} \exp\left(-\frac{1}{\sigma_n^2}\|z - h_1 x_1\|^2\right)}{\sum_{x_1 \in A_{2nd,j}^1} \exp\left(-\frac{1}{\sigma_n^2}\|z - h_1 x_1\|^2\right)},$$

with $j = 0..\log_2 |A_{2nd}| - 1$.

5. A method according to claim 3 or 4, further comprising the steps of:

estimating a measure of mutual information between the codebits represented by the second signal and either one of the second log-likelihood ratios and the third log-likelihood ratios;
comparing the estimated measure with a threshold value; and
selectively decoding, responsive to a result of the comparing step, the codebits represented by the second signal on the basis of either one of the second log-likelihood ratios and the third log-likelihood ratios.

6. A method according to claim 5, further comprising the step of averaging the estimated measure over a plurality of successive codebits.

7. A method according to claim 5 or 6, further comprising the step of obtaining the threshold value from signaling information.

8. A method according to any of claims 5 to 7, wherein the codebits represented by the second signal are decoded on the basis of the third log-likelihood ratios, when the estimated measure of the mutual information between the codebits represented by the second signal and the second log-likelihood ratios is smaller than the threshold value.

9. A method according to claim 5 or 6, further comprising the steps of
switching the decoding of the codebits represented by the second signal from a first mode, in which said codebits are decoded on the basis of the second log-likelihood ratios, to a second mode, in which said codebits are decoded on the basis of the third log-likelihood ratios, when the estimated measure of mutual information between said codebits and the second log-likelihood ratios is smaller than a first threshold value; and
switching the decoding of the codebits represented by the second signal from the second mode to the first mode, when the estimated measure of mutual information between said codebits and the third log-likelihood ratios exceeds a second threshold value higher than the first threshold value.

10. A method according to claim 9, further comprising the step of obtaining the first threshold value and the second threshold value from signaling information.

11. A method according to any of claims 5 to 10, wherein the measure is estimated according to an equation equivalent to

$$\hat{I}(b_k; L_k) = 1 - \frac{\log_2(1 + \exp(-L_k))}{1 + \exp(-L_k)} - \frac{\log_2(1 + \exp(L_k))}{1 + \exp(+L_k)}$$

wherein $L_k$ is the one of the second log-likelihood ratios and the third log-likelihood ratios of the $k$-th code bit $b_k$.

12. An apparatus for detecting information bits in a received signal $y$, said received signal comprising a superposition of at least a first signal $x_0$, a second signal $x_1$, and additive noise $n$ with power $\sigma_n^2$ such that $y = h_0 \cdot x_0 + h_1 \cdot x_1 + n$ with appropriate weights $h_0$ and $h_1$, said apparatus comprising:

a first de-mapping unit for computing, from the received signal, first log-likelihood ratios for codebits represented by the first signal;

a second de-mapping unit for computing, from the received signal and the first log-likelihood ratios, second log-likelihood ratios for codebits represented by the second signal; and

a decoding unit for decoding the codebits represented by the second signal on the basis of the computed second log-likelihood ratios

**characterized in that**

the first log-likelihood ratios for the first signal are computed according to an equation equivalent to

$$L_{1st}(c_i) = \log \frac{\sum_{x_0 \in A_{1st,i}^0} \exp\left(-\frac{1}{\tilde{\sigma}^2} \|y - h_0 x_0\|^2\right)}{\sum_{x_0 \in A_{1st,i}^1} \exp\left(-\frac{1}{\tilde{\sigma}^2} \|y - h_0 x_0\|^2\right)},$$

or

$$L_{1st}(c_i) = \log \frac{\sum_{x_0 \in A_{1st,i}^0} \sum_{x_1 \in A_{2nd}} \exp\left(-\frac{1}{\sigma_n^2} \|y - h_0 x_0 - h_1 x_1\|^2\right)}{\sum_{x_0 \in A_{1st,i}^1} \sum_{x_1 \in A_{2nd}} \exp\left(-\frac{1}{\sigma_n^2} \|y - h_0 x_0 - h_1 x_1\|^2\right)},$$

with $i = 0.. \log_2 |A_{1st}| - 1$, and

the second log-likelihood ratios for the second signal are computed according to an equation equivalent to

$$L_{2nd}(c_j)$$

$$= \log \frac{\sum_{x_0 \in A_{1st}} \sum_{x_1 \in A_{2nd,j}^0} \exp\left(-\frac{1}{\sigma^2} \|y - h_0 x_0 - h_1 x_1\|^2 - \sum_{i=0}^{\log_2 |A_{1st}|-1} \mu_i^{-1}(x_0) L_{1st}(c_i)\right)}{\sum_{x_0 \in A_{1st}} \sum_{x_1 \in A_{2nd,j}^1} \exp\left(-\frac{1}{\sigma^2} \|y - h_0 x_0 - h_1 x_1\|^2 - \sum_{i=0}^{\log_2 |A_{1st}|-1} \mu_i^{-1}(x_0) L_{1st}(c_i)\right)},$$

with $j = 0..\log_2 |A_{2nd}| - 1$,

wherein

$L_{1st}(c_i)$ denotes the log-likelihood ratio for the $i$-th codebit $c_i$ for each bit-level $i$ with $0 \leq i < \log_2 |A_{1st}|$,

$L_{2nd}(c_j)$ denotes the log-likelihood ratio for the $j$-th codebit $c_j$ for each bit-level $j$ with $0 \leq j < \log_2 |A_{2nd}|$,

$A_{1st}$ is the symbol alphabet for the first layer,

$A_{1st,i}^b$ are the first-layer sub-alphabets for which the $i$-th codebit $c_i$ assumes the binary value $b = \{0,1\}$,

$A_{2nd}$ is the symbol alphabet for the second layer,

$A_{2nd,j}^b$ are the second-layer sub-alphabets for which the $j$-th codebit $c_j$ assumes the binary value $b = \{0,1\}$,

$\mu_i^{-1}(x_0)$ is an inverse mapping function which takes a symbol from the first layer, $x_0$, and returns the i-th codebit carried by this symbol, and

$\tilde{\sigma}^2 = |h_1|^2 \cdot E\{|x_1|^2\} + \sigma_n^2$ is the equivalent noise power.

**Patentansprüche**

1. Verfahren zum Erfassen von Informationsbits in einem empfangenen Signal y, wobei das empfangene Signal eine Überlagerung von wenigstens einem ersten Signal $x_0$, einem zweiten Signal $x_1$ und additives Rauschen n mit der Leistung $\sigma_n^2$, so dass $y = h_0 \cdot x_0 + h_1 \cdot x_1 + n$ mit geeigneten Gewichtungen $h_0$ und $h_1$ ist, wobei das Verfahren folgende Schritte umfasst:

Berechnen, aus dem empfangenen Signal, erster Log-Likelihood-Verhältnisse für Codebits, die durch das erste Signal dargestellt werden;

Berechnen, aus dem empfangenen Signal und den ersten Log-Likelihood-Verhältnissen, zweiter Log-Likelihood-Verhältnisse für Codebits, die durch das zweite Signal dargestellt werden; und

Decodieren der durch das zweite Signal dargestellten Codebits auf der Basis der berechneten zweiten Log-Likelihood-Verhältnisse,

**dadurch gekennzeichnet, dass**

die ersten Log-Likelihood-Verhältnisse für das erste Signal gemäß einer Gleichung berechnet werden, die äquivalent ist zu

$$L_{1st}(c_i) = \log \frac{\sum_{x_0 \in A^0_{1st,i}} \exp\left(-\frac{1}{\tilde{\sigma}^2}\|y - h_0 x_0\|^2\right)}{\sum_{x_0 \in A^1_{1st,i}} \exp\left(-\frac{1}{\tilde{\sigma}^2}\|y - h_0 x_0\|^2\right)},$$

oder

$$L_{1st}(c_i) = \log \frac{\sum_{x_0 \in A^0_{1st,i}} \sum_{x_1 \in A_{2nd}} \sum \exp\left(-\frac{1}{\sigma_n^2}\|y - h_0 x_0 - h_1 x_1\|^2\right)}{\sum_{x_0 \in A^1_{1st,i}} \sum_{x_1 \in A_{2nd}} \sum \exp\left(-\frac{1}{\sigma_n^2}\|y - h_0 x_0 - h_1 x_1\|^2\right)},$$

mit $i = 0 .. \log_2 |A_{1st}| - 1$, und

die zweiten Log-Likelihood-Verhältnisse für das zweite Signal gemäß einer Gleichung berechnet werden, die äquivalent ist zu

$$L_{2nd}(c_j)$$

$$= \log \frac{\sum_{x_0 \in A_{1st}} \sum_{x_1 \in A^0_{2nd,j}} \sum \exp\left(-\frac{1}{\sigma^2}\|y - h_0 x_0 - h_1 x_1\|^2 - \sum_{i=0}^{log_2 |A_{1st}|-1} \mu_i^{-1}(x_0) L_{1st}(c_i)\right)}{\sum_{x_0 \in A_{1st}} \sum_{x_1 \in A^1_{2nd,j}} \sum \exp\left(-\frac{1}{\sigma^2}\|y - h_0 x_0 - h_1 x_1\|^2 - \sum_{i=0}^{log_2 |A_{1st}|-1} \mu_i^{-1}(x_0) L_{1st}(c_i)\right)}$$

mit $j = 0 .. \log_2 |A_{2nd}| - 1$

wobei $L_{1st}(c_i)$ das Log-Likelihood-Verhältnis für den i-ten Codebit $c_i$ für jede Bitebene i mit $0 \leq i < \log_2 |A_{1st}|$ bezeichnet,

$L_{2nd}(C_j)$ das Log-Likelihood-Verhältnis für den j-ten Codebit $c_j$ für jede Bitebene j mit $0 \leq j < \log_2|A_{2nd}|$ bezeichnet,

$A_{1st}$ das Symbolalphabet für die erste Ebene ist,

$A^b_{1st,i}$ A die Unteralphabete der ersten Schicht sind, für die das i-te Codebit $c_i$ den Binärwert $b = \{0,1\}$ annimmt,

$A_{2nd}$ das Symbolalphabet für die zweite Ebene ist,

$A^b_{2nd,j}$ die Unteralphabete der zweiten Schicht sind, für die der j-te Codebit $c_j$ den Binärwert $b = \{0,1\}$ annimmt,

$\mu_i^{-1}(x_0)$ eine inverse Abbildungsfunktion ist, die ein Symbol aus der ersten Schicht $x_0$ nimmt und das i-te Codebit zurückgibt, das von diesem Symbol mitgeführt wird, und $\tilde{\sigma}^2 = |h_1|^2 \cdot E\{|x_1|^2 + \sigma_n^2\}$ die äquivalente Rauschleistung ist.

2. Verfahren nach Anspruch 1, weiterhin umfassend den Schritt des Decodierens der durch das erste Signal dargestellten Codebits auf der Basis der berechneten ersten Log-Likelihood-Verhältnisse.

3. Verfahren nach Anspruch 2, weiterhin umfassend folgende Schritte:

Erzeugen eines dritten Signals durch Neucodieren und Neumodulieren der decodierten Codebits des ersten Signals;

Erzeugen eines Differenzsignals (z) durch Subtrahieren des dritten Signals von dem empfangenen Signal;

Berechnen, aus dem Differenzsignal (z), von dritten Log-Likelihood-Verhältnissen für Codebits, die durch das zweite Signal dargestellt werden.

4. Verfahren nach Anspruch 3, bei dem die dritten Log-Likelihood-Verhältnisse für das zweite Signal gemäß einer Gleichung berechnet werden, die äquivalent ist zu

$$L_{2\text{nd}}(c_j) = \log \frac{\sum_{x_1 \in A^0_{2nd,j}} \exp\left(-\frac{1}{\sigma_{\hat{n}}^2}\|z - h_1 x_1\|^2\right)}{\sum_{x_1 \in A^1_{2nd,j}} \exp\left(-\frac{1}{\sigma_{\hat{n}}^2}\|z - h_1 x_1\|^2\right)},$$

mit $j = 0 \, .. \, \log_2 |A_{2\text{nd}}| - 1$

5. Verfahren nach Anspruch 3 oder 4, weiterhin umfassend folgende Schritte:

Schätzen eines Maßes für wechselseitige Informationen zwischen den durch das zweite Signal dargestellten Codebits und entweder einem der zweiten Log-Likelihood-Verhältnisse und den dritten Log-Likelihood-Verhältnissen;
Vergleichen des geschätzten Maßes mit einem Schwellenwert; und
selektives Decodieren der durch das zweite Signal dargestellten Codebits auf der Grundlage eines der zweiten Log-Likelihood-Verhältnisse und der dritten Log-Likelihood-Verhältnisse als Reaktion auf ein Ergebnis des Vergleichsschritts.

6. Verfahren nach Anspruch 5, weiterhin umfassend den Schritt des Mittelns des geschätzten Maßes über mehrere aufeinanderfolgende Codebits.

7. Verfahren nach Anspruch 5 oder 6, weiterhin umfassend den Schritt des Beziehens des Schwellenwertes aus Signalisierungsinformationen.

8. Verfahren nach einem der Ansprüche 5 bis 7, bei dem die durch das zweite Signal dargestellten Codebits auf der Basis der dritten Log-Likelihood-Verhältnisse decodiert werden, wenn das geschätzte Maß der wechselseitigen Information zwischen den durch das zweite Signal dargestellten Codebits und das zweite Log-Likelihood-Verhältnis kleiner ist als der Schwellenwert.

9. Verfahren nach Anspruch 5 oder 6, weiterhin umfassend folgende Schritte:

Umschalten der Decodierung der durch das zweite Signal dargestellten Codebits von einem ersten Modus, in dem die Codebits auf der Basis der zweiten Log-Likelihood-Verhältnisse decodiert werden, in einen zweiten Modus, in dem die Codebits auf der Basis der dritten Log-Likelihood-Verhältnisse decodiert werden, wenn das geschätzte Maß der wechselseitigen Informationen zwischen den Codebits und den zweiten Log-Likelihood-Verhältnissen kleiner als ein erster Schwellenwert ist; und
Umschalten der Decodierung der durch das zweite Signal dargestellten Codebits von dem zweiten Modus in den ersten Modus, wenn das geschätzte Maß der wechselseitigen Informationen zwischen den Codebits und den dritten Log-Likelihood-Verhältnissen einen zweiten Schwellenwert überschreitet, der höher als der erste Schwellenwert ist.

10. Verfahren nach Anspruch 9, weiterhin umfassend den Schritt des Beziehens des ersten Schwellenwertes sowie des zweiten Schwellenwertes aus Signalisierungsinformationen.

11. Verfahren nach einem der Ansprüche 5 bis 10, bei dem das Maß gemäß einer Gleichung geschätzt wird, die äquivalent ist zu

$$\hat{I}(b_k; L_k) = 1 - \frac{\log_2(1 + \exp(-L_k))}{1 + \exp(-L_k)} - \frac{\log_2(1 + \exp(L_k))}{1 + \exp(+L_k)}$$

wobei $L_k$ das eine der zweiten Log-Likelihood-Verhältnisse und der dritten Log-Likelihood-Verhältnisse des k-ten Codebits $b_k$ ist.

**12.** Gerät zum Erfassen von Informationsbits in einem empfangenen Signal y, wobei das empfangene Signal eine Überlagerung von wenigstens einem ersten Signal $x_0$, einem zweiten Signal $x_1$ und additives Rauschen n mit der Leistung $\sigma_n^2$, so dass $y = h_0 \cdot x_0 + h_1 \cdot x_1 + n$ mit geeigneten Gewichtungen $h_0$ und $h_1$ ist, wobei das Gerät umfasst:

eine erste Rückbildungseinheit zum Berechnen, aus dem empfangenen Signal, erster Log-Likelihood-Verhältnisse für Codebits, die durch das erste Signal dargestellt werden;

eine zweite Rückbildungseinheit zum Berechnen, aus dem empfangenen Signal und den ersten Log-Likelihood-Verhältnissen, zweiter Log-Likelihood-Verhältnisse für Codebits, die durch das zweite Signal dargestellt werden; und

eine Decodiereinheit zum Decodieren der durch das zweite Signal dargestellten Codebits auf der Basis der berechneten zweiten Log-Likelihood-Verhältnisse,

**dadurch gekennzeichnet, dass**

die ersten Log-Likelihood-Verhältnisse für das erste Signal gemäß einer Gleichung berechnet werden, die äquivalent ist zu

$$L_{1\text{st}}(c_i) = \log \frac{\sum_{x_0 \in A_{1st,i}^0} \exp\left(-\frac{1}{\tilde{\sigma}^2}\|y - h_0 x_0\|^2\right)}{\sum_{x_0 \in A_{1st,i}^1} \exp\left(-\frac{1}{\tilde{\sigma}^2}\|y - h_0 x_0\|^2\right)},$$

oder

$$L_{1\text{st}}(c_i) = \log \frac{\sum_{x_0 \in A_{1st,i}^0} \sum_{x_1 \in A_{2nd}} \sum \exp\left(-\frac{1}{\sigma_n^2}\|y - h_0 x_0 - h_1 x_1\|^2\right)}{\sum_{x_0 \in A_{1st,i}^1} \sum_{x_1 \in A_{2nd}} \sum \exp\left(-\frac{1}{\sigma_n^2}\|y - h_0 x_0 - h_1 x_1\|^2\right)},$$

mit $i = 0 .. \log_2 |A_{1st}| - 1$, und

die zweiten Log-Likelihood-Verhältnisse für das zweite Signal gemäß einer Gleichung berechnet werden, die äquivalent ist zu

$$L_{2\text{nd}}(c_j)$$

$$= \log \frac{\sum_{x_0 \in A_{1st}} \sum_{x_1 \in A_{2nd,j}^0} \sum \exp\left(-\frac{1}{\sigma^2}\|y - h_0 x_0 - h_1 x_1\|^2 - \sum_{i=0}^{log_2|A_{1st}|-1} \mu_i^{-1}(x_0) L_{1st}(c_i)\right)}{\sum_{x_0 \in A_{1st}} \sum_{x_1 \in A_{2nd,j}^1} \sum \exp\left(-\frac{1}{\sigma^2}\|y - h_0 x_0 - h_1 x_1\|^2 - \sum_{i=0}^{log_2|A_{1st}|-1} \mu_i^{-1}(x_0) L_{1st}(c_i)\right)}$$

mit $j = 0 .. \log_2 |A_{2nd}| - 1$

wobei $L_{1st}(c_i)$ das Log-Likelihood-Verhältnis für den i-ten Codebit $c_i$ für jede Bitebene i mit $0 \le i < \log_2 |A_{1st}|$ bezeichnet,

$L_{2nd}(c_j)$ das Log-Likelihood-Verhältnis für den j-ten Codebit $c_j$ für jede Bitebene j mit $0 \le j < \log_2|A_{2nd}|$ bezeichnet,

$A_{1st}$ das Symbolalphabet für die erste Ebene ist,

$A_{1st,i}^b$ A die Unteralphabete der ersten Schicht sind, für die das i-te Codebit $c_i$ den Binärwert $b = \{0,1\}$ annimmt,

$A_{2nd}$ das Symbolalphabet für die zweite Ebene ist,

$A_{2nd,j}^b$ die Unteralphabete der zweiten Schicht sind, für die der j-te Codebit $c_j$ den Binärwert $b = \{0,1\}$ annimmt,

$\mu_i^{-1}(x_0)$ eine inverse Abbildungsfunktion ist, die ein Symbol aus der ersten Schicht $x_0$ nimmt und das i-te Codebit zurückgibt, das von diesem Symbol mitgeführt wird, und

$$\tilde{\sigma}^2 = |h_1|^2 \cdot E\{|x_1|^2 + \sigma_n^2\}$$ die äquivalente Rauschleistung ist.

**Revendications**

1. Procédé de détection de bits d'information dans un signal reçu *y*, ledit signal reçu comprenant une superposition au moins d'un premier signal $x_0$, d'un deuxième signal $x_1$ et d'un bruit additif *n* avec une puissance $\sigma_n^2$ telle que $y=h_0 \cdot x_0+h_1 \cdot x_1+n$ avec les poids appropriés $h_0$ et $h_1$, ledit procédé comprenant les étapes suivantes :

   calcul, à partir du signal reçu, de premiers ratios de log-vraisemblance pour des codebits représentés par le premier signal ;
   calcul, à partir du signal reçu et des premiers ratios de log-vraisemblance, de deuxièmes ratios de log-vraisemblance pour des codebits représentés par le deuxième signal ; et
   décodage des codebits représentés par le deuxième signal sur base des deuxièmes ratios de log-vraisemblance calculés,
   **caractérisé en ce que**
   les premiers ratios de log-vraisemblance pour le premier signal sont calculés conformément à une équation équivalente à

$$L_{1\text{st}}(c_i) = \log \frac{\sum \exp\left(-\frac{1}{\sigma^2}\|y-h_0 x_0\|^2\right)}{\sum \exp\left(-\frac{1}{\sigma^2}\|y-h_0 x_0\|^2\right)},$$

   ou

$$L_{1\text{st}}(c_i) = \log \frac{\sum_{x_0 \in A_{1\text{st,i}}^0} \sum \exp\left(-\frac{1}{\sigma_n^2}\|y-h_0 x_0-h_1 x_1\|^2\right)}{\sum_{x_0 \in A_{1\text{st,i}}^1} \sum \exp\left(-\frac{1}{\sigma_n^2}\|y-h_0 x_0-h_1 x_1\|^2\right)},$$

   avec i=0..$\log_2|A_{1\text{st}}|$ - 1, et
   les deuxièmes ratios de log-vraisemblance pour le deuxième signal sont calculés conformément à une équation équivalente à

$$L_{2\text{nd}}(c_j) = \log \frac{\sum\sum \exp\left(-\frac{1}{\sigma^2}\|y-h_0 x_0-h_1 x_1\|^2 - \sum \mu_i^{-1}(x_0)L_{1\text{st}}(c_i)\right)}{\sum\sum \exp\left(-\frac{1}{\sigma^2}\|y-h_0 x_0-h_1 x_1\|^2 - \sum \mu_i^{-1}(x_0)L_{1\text{st}}(c_i)\right)}$$

   avec j=0..$\log_2|A_{2\text{nd}}|$ - 1
   dans laquelle

   $L_{1\text{st}}(c_i)$ désigne le ratio de log-vraisemblance pour le *i*-ième codebit $c_i$ pour chaque niveau binaire *i* avec $0 \leq$ i<$\log_2|A_{1\text{st}}|$,
   $L_{2\text{nd}}(c_j)$ désigne le ratio de log-vraisemblance pour le j-ième codebit $c_j$ pour chaque niveau binaire *j* avec $0 \leq$ j<$\log_2|A_{2\text{nd}}|$,
   $A_{1\text{st}}$ est l'alphabet de symboles pour la première couche,
   $A_{1\text{st,i}}^b$ sont les sous-alphabets de première couche pour lesquels le *i*-ième codebit $c_j$ adopte la valeur binaire b={0,1},

   $A_{2\text{nd}}$ est l'alphabet de symboles pour la deuxième couche, $A_{2\text{nd,j}}^b$ sont les sous-alphabets de deuxième couche pour lesquels le *j*-ième codebit $c_j$ adopte la valeur binaire b={0,1},

   $\mu_i^{-1}(x_0)$ est une fonction de mappage inverse qui prend un symbole de la première couche, $x_0$, et renvoie le *i*-ième codebit porté par ce symbole, et
   $\tilde{\sigma}^2 = |h_1|^2 \cdot E\{|x_1|^2 + \sigma_n^2\}$ est la puissance de bruit équivalente.

**2.** Procédé selon la revendication 1, comprenant en outre l'étape de décodage des codebits représentés par le premier signal sur base des premiers ratios de log-vraisemblance calculés.

**3.** Procédé selon la revendication 2, comprenant en outre les étapes suivantes :

génération d'un troisième signal en recodant et remodulant les codebits décodés du premier signal ;
génération d'un signal de différence (z) en soustrayant le troisième signal du signal reçu ;
calcul, à partir du signal de différence (z), de troisièmes ratios de log-vraisemblance pour des codebits représentés par le deuxième signal.

**4.** Procédé selon la revendication 3, dans lequel les troisièmes ratios de log-vraisemblance pour le deuxième signal sont calculés conformément à une équation équivalente à

$$L_{2\text{nd}}(c_j) = \log \frac{\sum \exp\left(-\frac{1}{\sigma_{\hat{n}}^2}\|z - h_1 x_1\|^2\right)}{\sum \exp\left(-\frac{1}{\sigma_{\hat{n}}^2}\|z - h_1 x_1\|^2\right)},$$

avec $j = 0..\log_2 |A_{2\text{nd}}| - 1$.

**5.** Procédé selon la revendication 3 ou 4, comprenant en outre les étapes suivantes :

estimation d'une mesure d'information mutuelle entre les codebits représentés par le deuxième signal et soit les deuxièmes ratios de log-vraisemblance, soit les troisièmes ratios de log-vraisemblance ;
comparaison de la mesure estimée à une valeur seuil ; et
décodage sélectif, en réponse à un résultat de l'étape de comparaison, des codebits représentés par le deuxième signal sur base soit des deuxièmes ratios de log-vraisemblance, soit des troisièmes ratios de log-vraisemblance.

**6.** Procédé selon la revendication 5, comprenant en outre l'étape de calcul de la moyenne de la mesure estimée sur une pluralité de codebits successifs.

**7.** Procédé selon la revendication 5 ou 6, comprenant en outre l'étape d'obtention de la valeur seuil à partir d'information de signalisation.

**8.** Procédé selon l'une quelconque des revendications 5 à 7, dans lequel les codebits représentés par le deuxième signal sont décodés sur base des troisièmes ratios de log-vraisemblance, quand la mesure estimée de l'information mutuelle entre les codebits représentés par le deuxième signal et les deuxièmes ratios de log-vraisemblance est inférieure à la valeur seuil.

**9.** Procédé selon la revendication 5 ou 6, comprenant en outre les étapes
de commutation du décodage des codebits représentés par le deuxième signal d'un premier mode, dans lequel lesdits codebits sont décodés sur base des deuxièmes ratios de log-vraisemblance, en un deuxième mode, dans lequel lesdits codebits sont décodés sur base des troisièmes ratios de log-vraisemblance, quand la mesure estimée de l'information mutuelle entre lesdits codebits et les deuxièmes ratios de log-vraisemblance est inférieure à une première valeur seuil ; et
de commutation du décodage des codebits représentés par le deuxième signal du deuxième mode au premier mode, quand la mesure estimée de l'information mutuelle entre lesdits codebits et les troisièmes ratios de log-vraisemblance dépasse une deuxième valeur seuil supérieure à la première valeur seuil.

**10.** Procédé selon la revendication 9, comprenant en outre l'étape d'obtention de la première valeur seuil et de la deuxième valeur seuil à partir d'information de signalisation.

**11.** Procédé selon l'une quelconque des revendications 5 à 10, dans lequel la mesure est estimée conformément à une équation équivalente à

$$\hat{I}(b_k; L_k) = 1 - \frac{\log_2\left(1 + \exp(-L_k)\right)}{1 + \exp(-L_k)} - \frac{\log_2\left(1 + \exp(L_k)\right)}{1 + \exp(+L_k)}$$

dans laquelle $L_k$ sont soit les deuxièmes ratios de log-vraisemblance, soit les troisièmes ratios de log-vraisemblance du $k$-ième codebit $b_k$.

12. Appareil de détection de bits d'information dans un signal reçu $y$, ledit signal reçu comprenant une superposition au moins d'un premier signal $x_0$, d'un deuxième signal $x_1$ et d'un bruit additif $n$ avec une puissance $\sigma_n^2$ telle que $y = h_0 \cdot x_0 + h_1 \cdot x_1 + n$ avec les poids appropriés $h_0$ et $h_1$, ledit appareil comprenant :

une première unité de démappage pour calculer, à partir du signal reçu, des premiers ratios de log-vraisemblance pour des codebits représentés par le premier signal ;
une deuxième unité de démappage pour calculer, à partir du signal reçu et des premiers ratios de log-vraisemblance, des deuxièmes ratios de log-vraisemblance pour des codebits représentés par le deuxième signal ; et
une unité de décodage pour décoder les codebits représentés par le deuxième signal sur base des deuxièmes ratios de log-vraisemblance calculés,
**caractérisé en ce que**
les premiers ratios de log-vraisemblance pour le premier signal sont calculés conformément à une équation équivalente à

$$L_{1\text{st}}(c_i) = \log \frac{\sum \exp\left(-\frac{1}{\sigma^2}\|y - h_0 x_0\|^2\right)}{\sum \exp\left(-\frac{1}{\sigma^2}\|y - h_0 x_0\|^2\right)},$$

ou

$$L_{1\text{st}}(c_i) = \log \frac{\sum_{x_0 \in A_{1\text{st,i}}^0} \sum \exp\left(-\frac{1}{\sigma_n^2}\|y - h_0 x_0 - h_1 x_1\|^2\right)}{\sum_{x_0 \in A_{1\text{st,i}}^1} \sum \exp\left(-\frac{1}{\sigma_n^2}\|y - h_0 x_0 - h_1 x_1\|^2\right)},$$

avec $i = 0..\log_2|A_{1\text{st}}| - 1$, et
les deuxièmes ratios de log-vraisemblance pour le deuxième signal sont calculés conformément à une équation équivalente à

$$L_{2\text{nd}}(c_j) = \log \frac{\sum \sum \exp\left(-\frac{1}{\sigma^2}\|y - h_0 x_0 - h_1 x_1\|^2 - \sum \mu_i^{-1}(x_0)L_{1\text{st}}(c_i)\right)}{\sum \sum \exp\left(-\frac{1}{\sigma^2}\|y - h_0 x_0 - h_1 x_1\|^2 - \sum \mu_i^{-1}(x_0)L_{1\text{st}}(c_i)\right)}$$

avec $j = 0..1\log_2|A_{2\text{nd}}| - 1$,
dans laquelle

$L_{1\text{st}}(c_i)$ désigne le ratio de log-vraisemblance pour le $i$-ième codebit $c_i$ pour chaque niveau binaire $i$ avec $0 \leq i < \log_2|A_{1\text{st}}|$,
$L_{2\text{nd}}(c_j)$ désigne le ratio de log-vraisemblance pour le $j$-ième codebit $c_j$ pour chaque niveau binaire $j$ avec $0 \leq j < \log_2|A_{2\text{nd}}|$,
$A_{1\text{st}}$ est l'alphabet de symboles pour la première couche,
$A_{1\text{st,i}}^b$ sont les sous-alphabets de première couche pour lesquels le $i$-ième codebit $c_i$ adopte la valeur binaire $b = \{0,1\}$,
$A_{2\text{nd}}$ est l'alphabet de symboles pour la deuxième couche,
$A_{2\text{nd,j}}^b$ sont les sous-alphabets de deuxième couche pour lesquels le $j$-ième codebit $c_j$ adopte la valeur binaire $b = \{0,1\}$,
$\mu_i^{-1}(x_0)$ est une fonction de mappage inverse qui prend un symbole de la première couche, $x_0$, et renvoie le $i$-ième codebit porté par ce symbole, et

$$\tilde{\sigma}^2 = |h_1|^2 \cdot E\{|x_1|^2 + \sigma_n^2\}$$

est la puissance de bruit équivalente.

Fig. 1

Fig. 2

$$y = h_0 x_0 + h_1 x_1 + n$$

Fig. 3

Fig. 4

Fig. 5

EP 3 481 019 B1

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009220034 A1

**Non-patent literature cited in the description**

- Digital Video Broadcasting (DVB); Frame structure channel coding and modulation for a second generation digital terrestrial television broadcasting system (DVB-T2)'', v1.4.1. *ETSI EN 302 755,* July 2015
- **P. P. BERGMANS ; T. M. COVER.** Cooperative broadcasting. *IEEE Trans. Inf. Theory,* May 1974, vol. 20 (3), 317-324
- **S. I. PARK et al.** Low Complexity Layered Division for ATSC 3.0. *IEEE Transactions on Broadcasting,* March 2016, vol. 62 (1), 233-243
- **E. STARE ; J. J. GIMÉNEZ ; P. KLENNER.** WiB: a new system concept for digital terrestrial television (DTT). *IBC Conference,* 2016